# EUROPEAN PATENT SPECIFICATION

(11) **EP 3 838 569 B1**
(45) Date of publication and mention of the grant of the patent: **15.06.2022**
(21) Application number: 19383157.5
(22) Date of filing: 20.12.2019
(51) Int. Cl.: B29C 70/44, B29C 70/56, B29D 99/00, B29C 33/00, B29C 33/30, B29C 70/54, B29B 11/16

(54) **METHOD FOR FORMING FIBRE COMPOSITE PREFORMS**
VERFAHREN ZUR HERSTELLUNG VON FASERVERBUNDVORFORMEN
PROCÉDÉ DE FORMATION DE PRÉFORMES COMPOSITES À FIBRES

(43) Date of publication of application: 23.06.2021
(73) Proprietor: Airbus Operations, S.L.U., 28906 Getafe (Madrid) (ES)
(72) Inventor: CEBOLLA GARROFE, Pablo, 28906 Getafe (ES)
(74) Representative: Elzaburu S.L.P.

(56) References cited:
- EP-A1- 3 000 586
- EP-A1- 3 115 185
- US-A1- 2006 108 057

## Description

### Field of the invention

The invention relates to a method for forming composite preforms with aggressive convex and/or kinks zones such that the preform is bent.

### Background of the invention

When using conventional forming methods to manufacture bent preforms, for instance, having aggressive convex or curved shapes and/or kink zones, wrinkles appear.

Convex flanges, for instance, in a curved convex structure like a frame, to be formed from flat laminates present the issue than when layup is done, said laminate is flat. Afterwards, the flat laminate is shaped into, for instance, a L-shape. Thus, there is an excess of material in the area of the flange of the L-shape with respect to the web of the preform due to its curved convex shape. This excess of material must be washed out to the sides of the preform to avoid wrinkling. When using a conventional forming method, this is hard to achieve, so wrinkle appear.

This effect is even more critical when the component comprises a kink area. Wrinkles appear in the kink area due to exceed of material, as in the previous example. The way to remove the wrinkles nowadays is to cut the flanges and to split them into two separate flanges with no continuous fibres between them.

EP3115185 discloses the preamble of claim 1. Specifically, it discloses a flexible punch and die that are used to form a flat composite laminate charge into a stiffener having a desired cross-sectional shape. A desired contour is formed in the stiffener by bending the punch and die. Ply wrinkling is avoided during contouring by maintaining those portions of the stiffener subject to wrinkling in tension as the contouring is being performed. Bridging of the plies during the contouring process is avoided by first contouring those sections of the stiffener that are subject to wrinkling, and then contouring the remaining sections of the stiffener.

US2006/108057 discloses an aircraft stringer lay-up assembly comprising a contoured curing block and a first mandrel element positioned thereon. The first mandrel assembly includes a first bar assembly having a plurality of rigidity reducing first slots formed along a first mandrel length. The plurality of rigidity reducing first slots protruding partially through a first mandrel depth of the first mandrel element to allow the first bar assembly to conform to the contoured curing block. A composite ply assembly is laid up onto the first mandrel element and cured while conformed to said contoured curing block such that a contoured composite stringer element is generated.

EP3000586 discloses a method for manufacturing a composite material part comprising a web and at least one flange comprising the following stages:
- a laying up stage, wherein a plurality of plies of different orientations, including 0º oriented plies, are laid up to obtain a flat laminate with edges comprising an outer contour and an inner contour, the flat laminate also comprising at least one section with a radius of curvature of less than 10 m, and
- a forming stage which comprises forming a fold along a folding line on the flat laminate to create a flange forming an angle with the web, the forming stage additionally comprising applying a stress tension to the 0º oriented plies located at least partially between the folding line and the outer contour of the flat laminate in the at least one section to avoid the appearance of wrinkles.

### Summary of the invention

This invention relates to a method for forming a preform from a layup laminate without wrinkles.

The method object of the invention enables complex geometries to be formed without wrinkles on those geometries that have these characteristics:
- Convex flanges geometry that results on an exceed of material in the formed flange causing wrinkles with conventional forming methods and/or kinks that causes also an exceed of material in the flanges to be formed.
- Double curvature preforms from laminates that cannot be develop from three-dimensional (3D) geometry.

The method object of the invention makes use of the concept of neutral axis. Neutral axis is an axis in the cross section of a beam (a member resisting bending) or shaft along which there are no longitudinal stresses or strains. If the section is symmetric, isotropic and is not curved before a bend occurs, then the neutral axis is at the geometric centroid. All fibres on one side of the neutral axis are in a state of tension, while those on the opposite side are in compression.

The forming method of the invention is able to displace the neutral axis bellow the flanges. This way, the method is able to form the preform while the fibres of the entire web and flange are under tension and no wrinkles are made.

The method for forming fibre composite preforms object of the invention is adapted to preforms comprising a web and at least a flange, a longitudinal axis and at least a bent part with respect to said longitudinal axis.

The method of the invention is defined in claim 1.

The claimed invention allows complex geometries to be formed without wrinkles.

### Description of the figures

To complete the description and in order to provide for a better understanding of the invention, drawings are provided. The drawings comprise the following figures.
Figure 1 shows a schematic perspective view of a C-shaped preform located onto the male part of an embodiment of a tooling.
Figure 2 shows a schematic perspective view of the C-shaped preform of figure 1 at a final bent position.
Figure 3 shows a cross-sectional view of the C-shaped preform of figure 1 located over the male part in a clamped position.
Figure 4 shows a perspective view of an embodiment of a tooling.
Figures 5 to 9 show cross-sectional views of the tooling of figure 4 in subsequent steps of an embodiment of the method.
Figure 10 shows a perspective view of the tooling of figure 4 at a final bending step of the method.
Figure 11 shows a schematic plan view of a C-shaped preform in two positions, a first position with no bent of the preform and a second position wherein the preform is bent around an axis transversal to the plane of the flange.
Figure 12 shows a schematic plan view of a C-shaped preform in two positions, a first position with no bent of the preform and a second position wherein the preform is bent around an axis transversal to the plane of the web.

### Detailed description of the invention

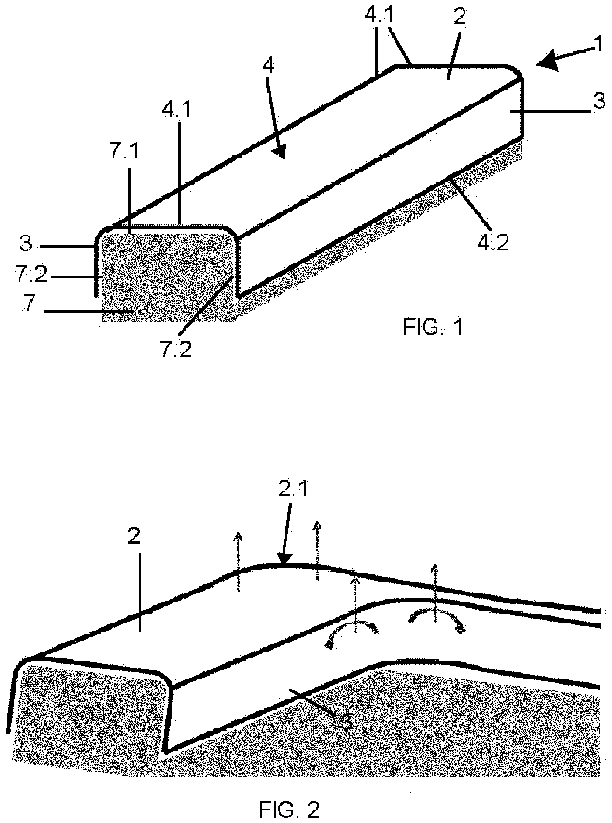

Figure 1 discloses a C-shaped preform. Alternatively, a L-shaped preform could also be formed with the present method. Although the concept presented in this invention can be applied to other structural parts of an aircraft component other than a C or L-shaped preform, this description will be focused on a C-shaped preform.

The C-shaped preform (1) is located onto the tooling (5). The laminate (4) comprises longitudinal edges (4.1) and transversal edges (4.2). The longitudinal edges (4.1) are the edges of the laminate (4) located in its longitudinal borders and that comprises a C shape. The transversal edges (4.2) are the transversal borders of the laminate (4) that extend along the flange (3) border.

The shown tooling (5) comprises a male part (7) comprising a surface (7.1) and two lateral walls (7.2). The web (2) of the preform (1) is located over the surface (7.1) of the male part (7) and the flange (3) is located over the lateral walls (7.2) of the male part (7). In the shown embodiment the surface (7.1) of the male part (7) is flat and the lateral walls (7.2) are also flat.

Figure 2 discloses the preform (1) of the embodiment of figure 1 with a bent part (2.1). Specifically, in the embodiment disclosed in figure 2, the bent part (2.1) is bent around an axis transversal to the plane of the flange (3) such that the preform (1) comprises a kink.

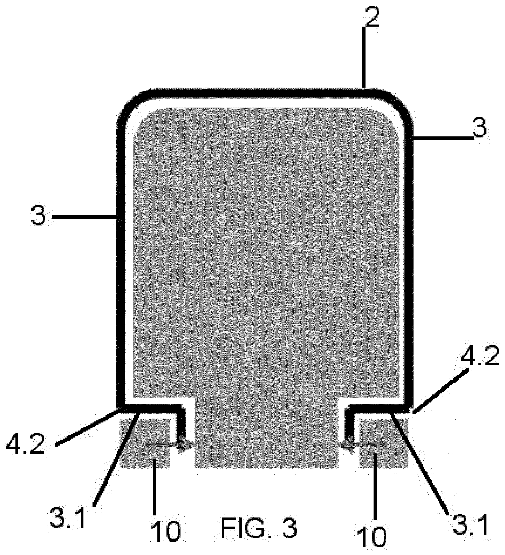

Figure 3 discloses an embodiment of the clamping system of the transversal edges (4.2) of the laminate (4). Specifically, the flanges (3) comprises an extra length area (3.1) that is clamped against the male part (7). In the shown embodiment it is done by means of two clamps (10) that extend along the transversal edges (4.2) of the laminate (4) and press the extra length area (3.1) against the male part (7). The web (2) and the flange (3) of the laid-up laminate (4), therefore, are kept under tensional loads.

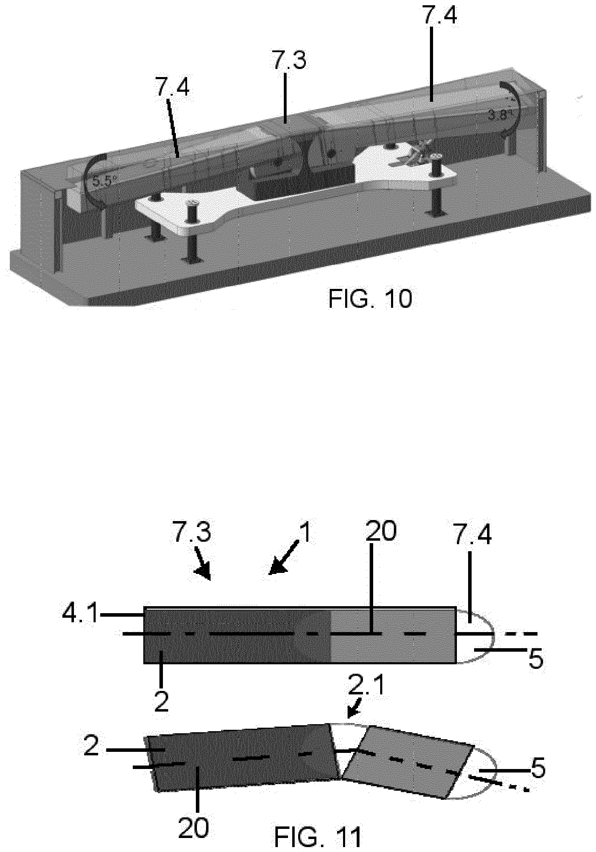

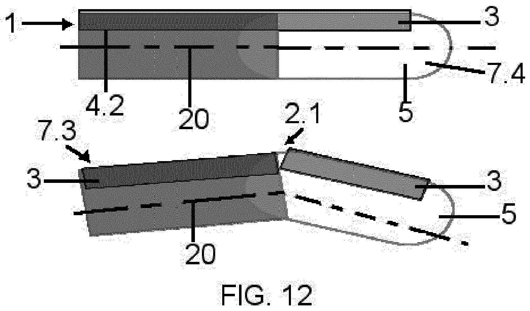

Figures 11 and 12 disclose two embodiments of a bent preform (1). Figure 11 discloses an embodiment in which the preform (1) is bent around an axis transversal to the plane of the web (2). It relates to a curved convex geometry, for instance, a frame.

In the shown embodiments, the male part (7) comprises a first part (7.3) and at least a second articulated part (7.4) with respect to the first part (7.3) such that the step of bending the male part (7) is performed by moving the second articulated part (7.4) with respect to the first part (7.3).

The first part (7.3) and the second articulated part (7.4) comprise surfaces configured to receive the laid-up laminate, said surfaces being located without any bent between them in the longitudinal direction during the step of lying-up the laminate (4).

Thus, in a first position, the laid-up laminate (4) is laminated such that the longitudinal axis (20) of both parts (7.3, 7.4) form a straight line. In the final step of the process, the articulated part (7.4) is moved with respect to the first part (7.3) and a bent part (2.1) is made.

Figure 12 discloses a lateral view of a preform (1) which is bent around an axis transversal to the plane of the flange (3) such that a kink in the C-shape preform (1) is made.

Equally, the first part (7.3) and the second articulated part (7.4) comprise surfaces configured to receive the laid-up laminate that are located without any bent between them in the longitudinal direction during the step of lying-up the laminate (4).

Specifically, in a first position, the surfaces of the first part (7.3) and the second part (7.4) are located in a flush manner. In the final step of the process, the articulated part (7.4) is moved with respect to the first part (7.3) and a bent part (2.1) is made.

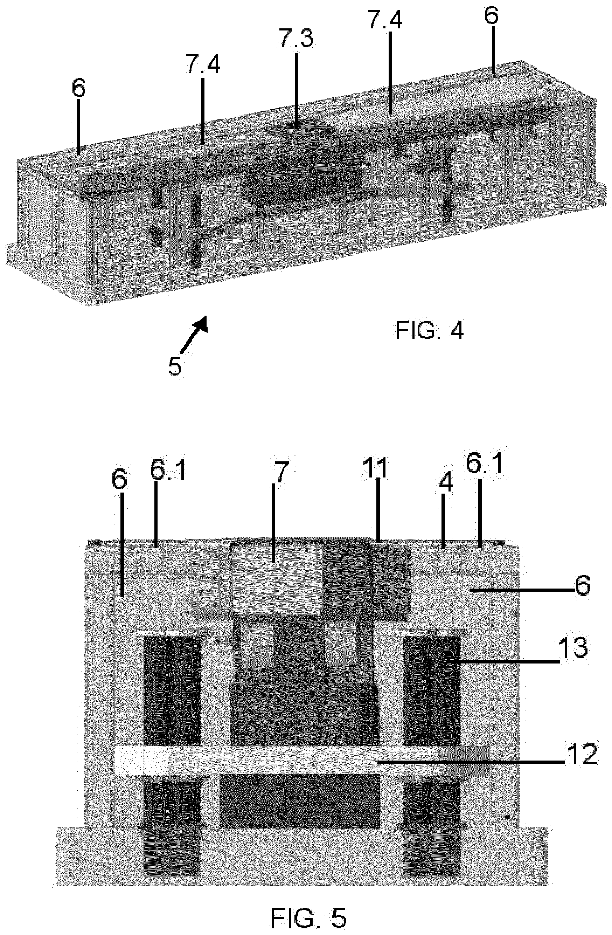

Figures 4 to 10 disclose another embodiment of the tooling (5). Said embodiment additionally to the male part (7) comprises a base part (6) comprising a surface (6.1) that may be flat. The male part (7) is movable with respect to the base part (6). Specifically, the male part (7) is displaced in a direction perpendicular to the surface (6.1) of the base part (6). Specifically, the male part (7) is located over a base plate (12) that slides with respect to a group of columns (13).

Laying-up a laminate (1) onto the tooling (5) according to the figures 4 to 10 comprises the following steps:
- Laying-up a laminate (4) over the surfaces (6.1, 7.1) of the base part (6) and of the male part (7). Additionally, in the embodiment shown in the figures, said surfaces (6.1, 7.1) are flat.
- Moving the male part (7) of the tooling (5) with respect to the base part (6) such that the flange (3) is moulded from the layup laminate (4) into the lateral walls (7.2) of the male part (7).

The laid-up laminate (4) is a flat laminate that comprises the web (2) and the flange (3).

In particular, as disclosed in figure 4, the male part (7) comprises a first part (7.3) and at least a second articulated part (7.4) with respect to the first part (7.3). Thus, the step of bending the preform (1) is performed by moving the second articulated part (7.4) with respect to the first part (7.3). Specifically, the tooling (5) shown in the embodiment comprises two articulated parts (7.4).

Both parts (7.3, 7.4) are displaceable with respect to the base part (6) of the tooling (5).

As can be seen in figures 5 to 10, both the first part (7.3) and the second articulated part (7.4) comprise flat surfaces configured to receive the laid-up laminate located in a flush manner during the step of lying-up the laminate (4) as can be seen in figure 5, for instance.

The forming process of the embodiment is performed by bagging. Specifically, a membrane (11) is located over the laminate (4) and sealed to the tooling (5). The membrane (11) covers the surfaces (7.1, 6.1) of the male part (7) and of the base part (6). The tooling (5) is additionally able to vary the pressure under the membrane (11) to form the preform. For this reason, the tooling (5) has to ensure airtight conditions when the it is actuated.

Additionally, the tooling (5) may be self-heated in order to allow heating under vacuum conditions to achieve binder activation. Device or elements sensitive to temperature shall be correctly isolated to avoid damaging during heating.

Other alternatives to the forming process are possible, for instance, by applying pressure to the web (2) and flanges (3) of the preform by a tooling instead by bagging.

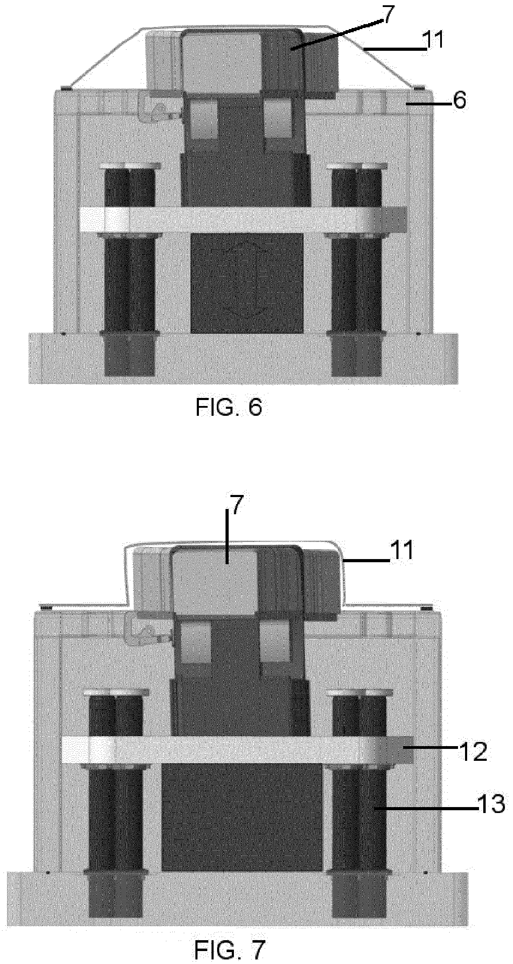

Figure 6 discloses the step in which the male part (7) is raised with respect to the base part (6). Thus, the membrane (11) is elongated due to the push of the male part (7) on the membrane (11). The flanges (3) of the laid-up laminate (4) are then deposited over the lateral walls (7.2) of the male part (7).

Figure 7 represents the forming step in which the air pressure under the membrane (11) is lowered to form the preform (1). Therefore, the membrane (11) is sucked in such a way that it is fixed on the male part (7) and the laminate (4) is formed.

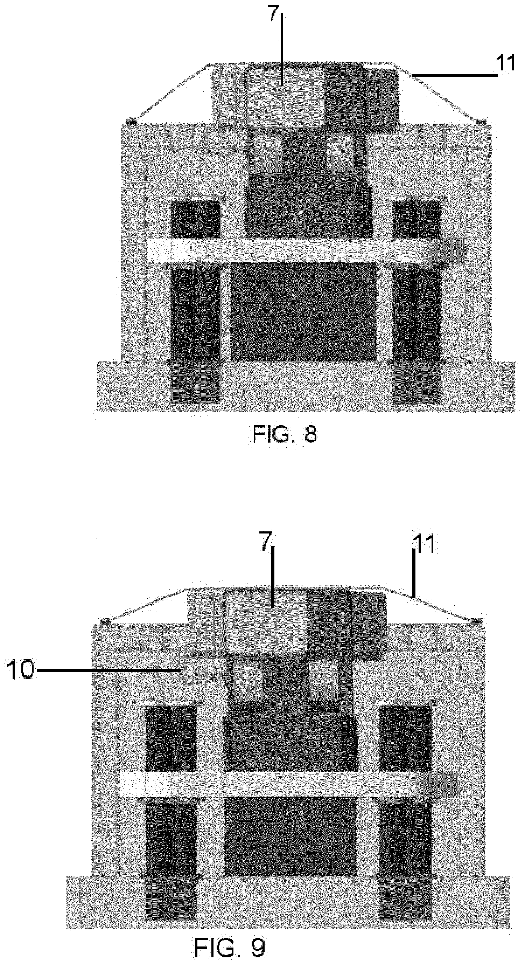

In the step shown in figure 8, the air pressure is raised from the pressure to form the preform (1) and the membrane (11) is released and afterwards, as can be seen in figure 9, the male part (7) is lowered.

The transversal edges (4.2) of the laminate (4) are clamped to the tooling (5) such that the web (2) and the flange (3) of the laid-up laminate (4) are kept under tensional loads. Specifically, the tooling (5) comprises clamps (10) as can see in figure 9.

The longitudinal edges (4.1) can also be clamped at this stage or, alternatively, they can be clamped before the forming step or they are not clamped in the whole process.

Finally, the articulated parts (7.4) of the tooling (5) are moved with respect to the first part (7.2) and the C-shaped preform (1) is kinked.

The laid-up laminate (4) comprises a plurality of layers. The method may comprise the step of cutting at least one of the layers of the laid-up laminate (4) in the area of the bent part (2.1) in a direction transversal to the longitudinal axis (20) of the preform (1). This is called darting or interlaminate-cutting. In other words, cutting, totally or partially, a layer or layers of the laminate (4) at one point to allow unidirectional fibers to open. In this way, gaps between the layers are introduced, especially in the 0 direction of the laminate.

These contiguous cut layers can be placed adjacent before bending the preform (1) so that there is a gap between them after bending the preform (1). Alternatively, the contiguous cut layers can be overlapped so that after bending the preform (1) there is no gap between them. In another embodiment, the contiguous cut layers can be overlapped so that after bending the preform (1) there is a certain degree of overlapping between the two adjacent layers.

The method of the invention has the advantage that it allows to include darting to improve flange (3) discontinuity to avoid tension and fibre breakage.

## Claims

1. Method for forming fibre composite preforms, the preform (1) comprising a web (2) and at least a flange (3), a longitudinal axis (20) and at least a bent part (2.1) with respect to its longitudinal axis (20), the method comprising the following steps:
• laying-up a laminate (4) onto a tooling (5), the laminate (4) comprising longitudinal edges (4.1) and transversal edges (4.2) and the tooling (5) comprising a male part (7) comprising a surface (7.1) and at least a lateral wall (7.2), the web (2) of the preform (1) being configured to be located over the surface (7.1) of the male part (7) and the flange (3) being configured to be located over the lateral wall (7.2) of the male part (7),
• forming the preform (1) over the male part (7),
• clamping the transversal edges (4.2) of the laminate (4) to the tooling (5) such that the web (2) and the flange (3) of the laid-up laminate (4) are kept under tensional loads,
• bending a longitudinal portion of the male part (7) with respect to the longitudinal axis (20) of the preform (1) such that the bent part (2.1) of the preform (1) is achieved, **characterized in that** the forming process is performed by bagging, the step of forming the preforms (1) comprising the sub-steps of:
• providing a membrane (11) over the laminate (4),
• sealing the membrane (11) against the tooling (5),
• lowering the pressure under the membrane (11) to form the preform (1), wherein the pressure under the membrane (11) is raised from the pressure to form the preform (1) after the forming step and before clamping the transversal edges (4.2).

2. Method for forming fibre composite preforms, according to claim 1, wherein the tooling (5) comprises a base part (6) comprising a surface (6.1), the male part (7) being movable with respect to the base part (6) in a direction perpendicular to the surface (6.1) of the base part (6), the step of laying-up a laminate (1) comprising the following steps:
• laying-up a laminate (4) over the surfaces (6.1, 7.1) of the base part (6) and of the male part (7),
• moving the male part (7) with respect to the base part (6) such that the flange (3) is located into the lateral wall (7.2) of the male part (7).

3. Method for forming fibre composite preforms, according to claim 2, wherein the surface (6.1) of the base part (6) and the surface (7.1) of the male part (7) are located in a flush manner when the laminate is laid-up over them.

4. Method for forming fibre composite preforms, according to any preceding claim, wherein the laid-up laminate (4) is a flat laminate that comprises the web (2) and the flange (3).

5. Method for forming fibre composite preforms, according to any preceding claim, wherein it comprises the step of clamping the longitudinal edges (4.1) of the laminate (4) to the tooling (5).

6. Method for forming fibre composite preforms, according to any preceding claim, wherein the preform (1) is bent around an axis transversal to the plane of the flange (3).

7. Method for forming fibre composite preforms, according to claims 1 or 5, wherein the preform (1) is bent around an axis transversal to the plane of the web (2).

8. Method for forming fibre composite preforms, according to any preceding claim, wherein the male part (7) comprises a first part (7.3) and at least a second articulated part (7.4) with respect to the first part (7.3) such that the step of bending the male part (7) is performed by moving the second articulated part (7.4) with respect to the first part (7.3).

9. Method for forming fibre composite preforms, according to claim 8, wherein the first part (7.3) and the second articulated part (7.4) comprise surfaces configured to receive the laid-up laminate, said surfaces being located without any bent between them in the longitudinal direction during the step of lying-up the laminate (4).

10. Method for forming fibre composite preforms, according to any preceding claim, wherein the laid-up laminate (4) comprises a plurality of layers and the method comprises the step of cutting at least one of the layers of the laid-up laminate (4) in the area of the bent part (2.1) in a direction transversal to the longitudinal axis (20) of the preform (1).

11. Method for forming fibre composite preforms, according to any preceding claim, wherein it comprises the step of providing an extra length area (3.1) of the flanges (3) and clamping said extra length area (3.1) against the male part (7).

## Patentansprüche

1. Verfahren zum Formen von Faserverbundvorformlingen, wobei der Vorformling (1) eine Bahn (2) und mindestens einen Flansch (3), eine Längsachse (20) und mindestens einen in Bezug zu seiner Längsachse (20) gekrümmten Teil (2.1) umfasst, wobei das Verfahren die folgenden Schritte umfasst:
• Schichten eines Laminats (4) auf ein Werkzeug (5), wobei das Laminat (4) Längskanten (4.1) und Querkanten (4.2) umfasst und das Werkzeug (5) einen aufzunehmenden Teil (7) umfasst, der eine Fläche (7.1) und mindestens eine Seitenwand (7.2) umfasst, wobei die Bahn (2) des Vorformlings (1) dazu ausgelegt ist, sich über der Fläche (7.1) des aufzunehmen Teils (7) zu befinden, und der Flansch (3) dazu ausgelegt ist, sich über der Seitenwand (7.2) des aufzunehmen Teils (7) zu befinden,
• Formen des Vorformlings (1) über dem aufzunehmenden Teil (7),
• Einspannen der Querkanten (4.2) des Laminats (4) auf dem Werkzeug (5), sodass die Bahn (2) und der Flansch (3) des geschichteten Laminats (4) unter Zugspannung gehalten werden,
• Krümmen eines Längsabschnitts des aufzunehmenden Teils (7) in Bezug zur Längsachse (20) des Vorformlings (1), sodass der gekrümmte Teil (2.1) des Vorformlings (1) erzeugt wird,
**dadurch gekennzeichnet, dass** der Formungsvorgang durch Einsacken durchgeführt wird, wobei der Schritt des Formens der Vorformlinge (1) die Folgenden Teilschritte umfasst:
• Vorsehen einer Membran (11) über dem Laminat (4),
• Abdichten der Membran (11) am Werkzeug (5),
• Senken des Drucks unter der Membran (11), um den Vorformling (1) zu formen,
wobei der Druck unter der Membran (11) nach dem Formungsschritt und vor dem Einspannen der Querkanten (4.2) von dem Druck zum Formen des Vorformlings (1) angehoben wird.

2. Verfahren zum Formen von Faserverbundvorformlingen nach Anspruch 1, wobei das Werkzeug (5) einen Basisteil (6) umfasst, der eine Fläche (6.1) umfasst, wobei der aufzunehmende Teil (7) in Bezug zum Basisteil (6) in eine Richtung senkrecht zu der Fläche (6.1) des Basisteils (6) beweglich ist, wobei der Schritt des Schichtens eines Laminats (1) die folgenden Schritte umfasst:
• Schichten eines Laminats (4) über die Flächen (6.1, 7.1) des Basisteils (6) und des aufzunehmenden Teils (7),
• Bewegen des aufzunehmenden Teils (7) in Bezug zum Basisteil (6), sodass sich der Flansch (3) in der Seitenwand (7.2) des aufzunehmenden Teils (7) befindet.

3. Verfahren zum Formen von Faserverbundvorformlingen nach Anspruch 2, wobei die Fläche (6.1) des Basisteils (6) und die Fläche (7.1) des aufzunehmenden Teils (7) bündig angeordnet sind, wenn das Laminat über sie geschichtet wird.

4. Verfahren zum Formen von Faserverbundvorformlingen nach einem der vorstehenden Ansprüche, wobei das geschichtete Laminat (4) ein flaches Laminat ist, das die Bahn (2) und den Flansch (3) umfasst.

5. Verfahren zum Formen von Faserverbundvorformlingen nach einem der vorstehenden Ansprüche, wobei es den Schritt des Einspannens der Längskanten (4.1) des Laminats (4) am Werkzeug (5) umfasst.

6. Verfahren zum Formen von Faserverbundvorformlingen nach einem der vorstehenden Ansprüche, wobei der Vorformling (1) um eine Ache gekrümmt wird, die quer zu der Ebene des Flanschs (3) verläuft.

7. Verfahren zum Formen von Faserverbundvorformlingen nach einem der Ansprüche 1 bis 5, wobei der Vorformling (1) um eine Achse gekrümmt wird, die quer zu der Ebene der Bahn (2) verläuft.

8. Verfahren zum Formen von Faserverbundvorformlingen nach einem der vorstehenden Ansprüche, wobei der aufzunehmende Teil (7) einen ersten Teil (7.3) und mindestens einen zweiten, in Bezug zum ersten Teil (7.3) gelenkigen Teil (7.4) umfasst, sodass der Schritt des Krümmens des aufzunehmenden Teils (7) durch Bewegen des zweiten gelenkigen Teils (7.4) in Bezug zum ersten Teil (7.3) durchgeführt wird.

9. Verfahren zum Formen von Faserverbundvorformlingen nach Anspruch 8, wobei der erste Teil (7.3) und der gelenkige zweite Teil (7.4) Flächen umfassen, die dazu ausgelegt sind, das geschichtete Laminat aufzunehmen, wobei die Flächen während des Schritts des Schichtens des Laminats (4) ohne Krümmung zwischen ihnen in Längsrichtung angeordnet sind.

10. Verfahren zum Formen von Faserverbundvorformlingen nach einem der vorstehenden Ansprüche, wobei das geschichtete Laminat (4) mehrere Schichten umfasst und das Verfahren den Schritt des Schneidens mindestens einer der Schichten des geschichteten Laminats (4) in dem Bereich des gekrümmten Teils (2.1) in eine Richtung quer zur Längsachse (20) des Vorformlings (1) umfasst.

11. Verfahren zum Formen von Faserverbundvorformlingen nach einem der vorstehenden Ansprüche, wobei es den Schritt des Vorsehens eines Extralängenbereichs (3.1) der Flansche (3) und des Einspannens des Extralängenbereichs (3.1) am aufzunehmenden Teil (7) umfasst.

## Revendications

1. Procédé de formation de préformes composites fibreuses, la préforme (1) comprenant une âme (2) et au moins une bride (3), un axe longitudinal (20) et au moins une partie pliée (2.1) par rapport à son axe longitudinal (20), le procédé comprenant les étapes suivantes :
- la pose d'un stratifié (4) sur un outillage (5), le stratifié (4) comprenant des bords longitudinaux (4.1) et des bords transversaux (4.2) et l'outillage (5) comprenant une partie mâle (7) comprenant une surface (7.1) et au moins une paroi latérale (7.2), l'âme (2) de la préforme (1) étant configurée pour être située sur la surface (7.1) de la partie mâle (7) et la bride (3) étant configurée pour être située sur la paroi latérale (7.2) de la partie mâle (7),
- la formation de la préforme (1) sur la partie mâle (7),
- le serrage des bords transversaux (4.2) du stratifié (4) sur l'outillage (5) de telle sorte que l'âme (2) et la bride (3) du stratifié posé (4) sont maintenues sous des charges de tension,
- le pliage d'une portion longitudinale de la partie mâle (7) par rapport à l'axe longitudinal (20) de la préforme (1) de telle sorte que la partie pliée (2.1) de la préforme (1) est obtenue,
**caractérisé en ce que** le processus de formation est réalisé par ensachage, l'étape de formation des préformes (1) comprenant les sous-étapes suivantes :
- la fourniture d'une membrane (11) sur le stratifié (4),
- le scellage de la membrane (11) contre l'outillage (5),
- l'abaissement de la pression sous la membrane (11) pour former la préforme (1), la pression sous la membrane (11) étant augmentée à partir de la pression pour former la préforme (1) après l'étape de formation et avant le serrage des bords transversaux (4.2).

2. Procédé de formation de préformes composites fibreuses selon la revendication 1, dans lequel l'outillage (5) comprend une partie de base (6) comprenant une surface (6.1), la partie mâle (7) étant mobile par rapport à la partie de base (6) dans une direction perpendiculaire à la surface (6.1) de la partie de base (6), l'étape de pose d'un stratifié (1) comprenant les étapes suivantes :
- la pose d'un stratifié (4) sur les surfaces (6.1, 7.1) de la pièce de base (6) et de la partie mâle (7),
- le déplacement de la partie mâle (7) par rapport à la partie de base (6) de telle sorte que la bride (3) est située dans la paroi latérale (7.2) de la partie mâle (7).

3. Procédé de formation de préformes composites fibreuses selon la revendication 2, dans lequel la surface (6.1) de la partie de base (6) et la surface (7.1) de la partie mâle (7) sont situées de manière affleurante lorsque le stratifié est posé sur elles.

4. Procédé de formation de préformes composites fibreuses selon l'une quelconque des revendications précédentes, dans lequel le stratifié posé (4) est un stratifié plat qui comprend l'âme (2) et la bride (3).

5. Procédé de formation de préformes composites fibreuses selon l'une quelconque des revendications précédentes, dans lequel il comprend l'étape de serrage des bords longitudinaux (4.1) du stratifié (4) sur l'outillage (5).

6. Procédé de formation de préformes composites fibreuses selon l'une quelconque des revendications précédentes, dans lequel la préforme (1) est pliée autour d'un axe transversal au plan de la bride (3).

7. Procédé de formation de préformes composites fibreuses selon la revendication 1 ou 5, dans lequel la préforme (1) est pliée autour d'un axe transversal au plan de l'âme (2).

8. Procédé de formation de préformes composites fibreuses selon l'une quelconque des revendications précédentes, dans lequel la partie mâle (7) comprend une première partie (7.3) et au moins une deuxième partie articulée (7.4) par rapport à la première partie (7.3) de telle sorte que l'étape de pliage de la partie mâle (7) est réalisée en déplaçant la deuxième partie articulée (7.4) par rapport à la première partie (7.3).

9. Procédé de formation de préformes composites fibreuses selon la revendication 8, dans lequel la première partie (7.3) et la deuxième partie articulée (7.4) comprennent des surfaces configurées pour recevoir le stratifié posé, lesdites surfaces étant situées sans aucun pli entre elles dans la direction longitudinale pendant l'étape de pose du stratifié (4).

10. Procédé de formation de préformes composites fibreuses selon l'une quelconque des revendications précédentes, dans lequel le stratifié posé (4) comprend une pluralité de couches et le procédé comprend l'étape de coupe d'au moins l'une des couches du stratifié posé (4) dans la zone de la partie pliée (2.1) dans une direction transversale à l'axe longitudinal (20) de la préforme (1).

11. Procédé de formation de préformes composites fibreuses selon l'une quelconque des revendications précédentes, dans lequel il comprend l'étape de fourniture d'une zone de longueur supplémentaire (3.1) des brides (3) et de serrage de ladite zone de longueur supplémentaire (3.1) contre la partie mâle (7).
